# EUROPEAN PATENT APPLICATION

(11) **EP 1 293 894 A2**
(43) Date of publication of application: **19.03.2003**
(21) Application number: 02015646.9
(22) Date of filing: 16.07.2002
(51) Int. Cl.: G06F 9/445

(54) **Start control method in a computer system**

(30) Priority: 12.09.2001 JP 2001275945
(71) Applicant: Kabushiki Kaisha Toshiba, Tokyo (JP)
(72) Inventor: Numano, Fujihito, Hamura-shi, Tokyo (JP); Akiyama, Yuki, 8-10-8, Shinmachi, Ome-shi, Tokyo (JP)
(74) Representative: Henkel, Feiler, Hänzel

(57) **Abstract**

A computer system includes a start button, a storage section and a controller. The start button starts a predetermined function allocated thereto. The first storage section stores first information on the predetermined function and second information as to whether the computer system is started upon operation of the start button. The controller starts the computer system in accordance with the predetermined function based on the first information when the second information indicates starting the computer system upon operation of the start button.

## Description

This application is based upon and claims the benefit of priority from the prior Japanese Patent Application No.2001-275945 filed on September 12, 2001; the entire contents of which are incorporated herein by reference.

### BACKGROUND OF THE INVENTION

### 1. Field of the Invention

The present invention relates to a computer system having a start button for starting a particular application program, and specifically to computer system control at the time of operation of the start button.

### 2. Description of the Related Art

There is a need to want to start various application programs simply as a personal computer becomes widespread. With respect to this need, a computer system equipped with a start button for starting a predetermined application program is present in a computer in addition to a power button for starting the computer. For example, even in the case that a power source of the personal computer has been turned off, it is constructed so that when the start button is operated, the power source is turned on and an OS (operating system) is started and an application program is started. Also, an application program to be started has been fixed to a start button and a user cannot change its combination arbitrarily. A technique for providing functions of registering or selecting an arbitrary application to a button for starting an application program is disclosed in JP-A-11-143619.

In the contents described above, an arbitrary program can be started by operation of a start button, but there is a problem that a function of controlling a start of an OS cannot be registered or selected and an application program starts automatically even when a user has operated the start button by mistake.

### BRIEF SUMMARY OF THE INVENTION

The invention has been made on the basis of the contents, and an object of the invention is to provide a computer system for controlling a start of an OS according to an operating state of a computer.

According to embodiments of the present invention, a computer system including a button, a first storage section, and a controller. The button starts a predetermined function allocated thereto. The first storage section stores information on the predetermined function. The controller starts the computer system with the predetermined function based on the information when it is indicated that the computer system is started upon operation of the button.

According to embodiments of the present invention, there is provided a method of controlling start of a computer system, the method includes the steps of detecting, reading and starting. The detecting step detects operation of a button having a predetermined function allocated thereto. The reading step reads information on the predetermined function. The starting step starts the computer system with the predetermined function based on the information when it is indicated that the computer system is started upon operation of the button.

According to embodiments of the present invention, there is provided a user interface displayed on a screen of a computer system, the user interface controlling an operation of a button provided for the computer system, the user interface includes first and second portions. The first portion sets whether or not an OS is started when the computer system is turned off and the button of the computer system is operated. The second portion sets an application to be started upon operation of the button of the computer system.

### BRIEF DESCRIPTION OF THE DRAWINGS

Fig. 1 is a diagram showing the whole configuration of a personal computer.
Fig. 2 is a diagram showing a hardware configuration of the personal computer.
Fig. 3 is a diagram showing a setting screen of a start button.
Fig. 4 is a diagram showing the setting screen of the start button.
Fig. 5 is a flowchart showing start processing based on an on-off setting state of the start button.
Fig. 6 is a diagram showing a software configuration of the personal computer.
Fig. 7 is a diagram showing the software configuration of the personal computer.
Fig. 8 is a flowchart showing resetting processing of start button on-off setting information.
Fig. 9 is a diagram showing the software configuration of the personal computer.

### DETAIELD DESCRIPTION OF THE PRESENT INVENTION

The present invention will be described with reference to the accompanying drawings.

### First Embodiment

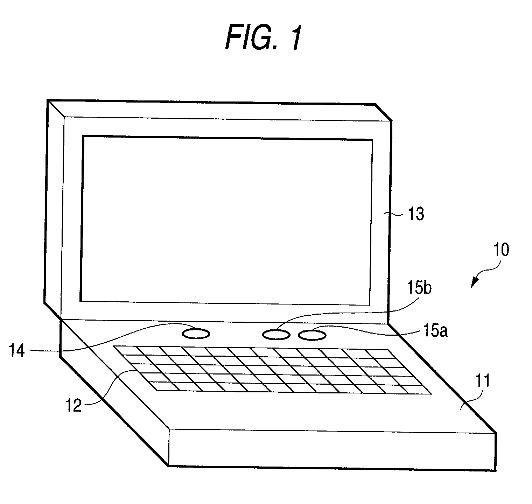

Fig. 1 is a perspective view showing a configuration of a personal computer according to a first embodiment of the present invention.

A computer system shown in Fig. 1 is a notebook-sized personal computer. A personal computer 10 is provided with a keyboard 12, a power button 14 and start buttons 15a, 15b for application start on the top of a body 11. Also, there is provided a display part having a liquid crystal display 13 openably connected to the body 11. Incidentally, with regard to configurations directly irrelevant to the invention, description is omitted.

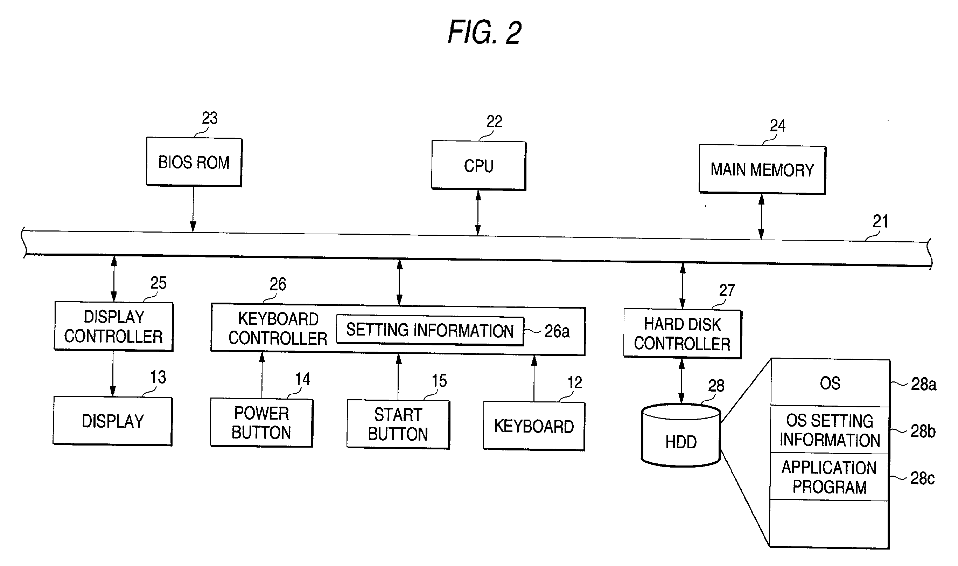

Fig. 2 is a diagram showing a system configuration of the personal computer 10. Incidentally, description is made by attaching the same marks to the same portions as those of Fig. 1.

As shown in the drawing, a CPU 22, a BIOS (Basic Input/Output System) ROM 23, a main memory 24, a display controller 25, a keyboard controller 26 and a hard disk controller 27 are connected to a system bus 21.

The CPU 22 administers control of the whole personal computer according to BIOS programs stored in the BIOS ROM 23 and an OS and application programs stored in a HDD 28. The BIOS ROM 23 stores the BIOS programs. The main memory 24 expands and stores an OS and application programs, etc. read from the HDD 28.

The display controller 25 performs display control of the display 13. The keyboard controller 26 performs key control of the keyboard 12 and also the CPU 22 is notified of an event from the power button 14 or the start button 15. Also, various setting information such as the presence or absence of a start of an application program or an OS allocated to the start button is stored inside the keyboard controller 26. The hard disk controller 27 performs control of readout and writing of the HDD 28. An OS 28a for controlling the personal computer, various OS setting information 28b such as a start condition of the computer or application programs 28c, etc. are stored in the HDD 28.

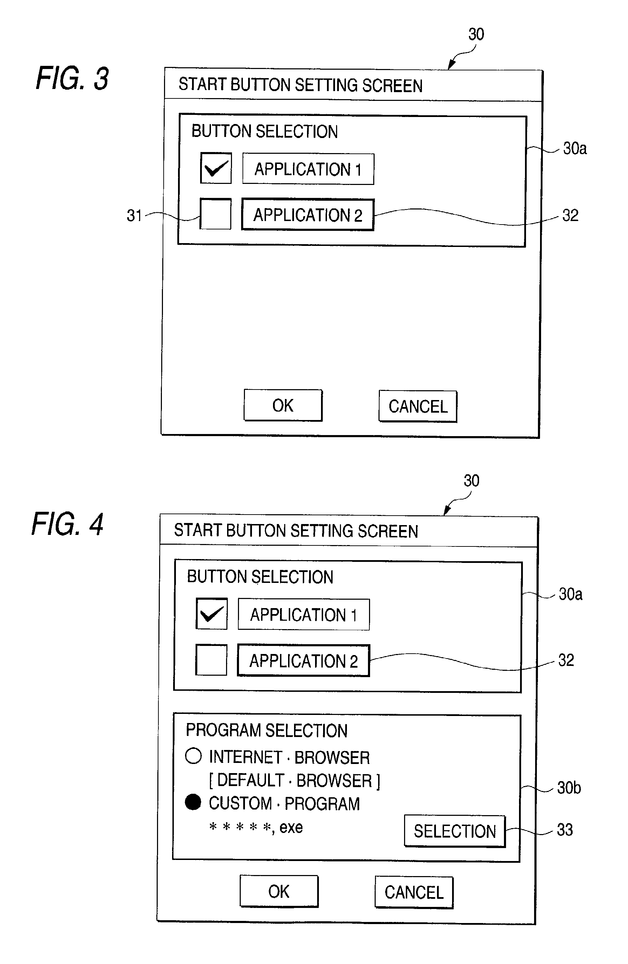

Figs. 3 and 4 are diagrams showing a setting screen for allocating an application program to the start button 15. Fig. 3 is an initial state of the setting screen. A setting screen 30 comprises check boxes 31 (corresponding to the start buttons 15a, 15b from the top) for setting whether or not an OS is started at the time of power-off of the body with respect to the start buttons 15a, 15b, respectively, and buttons 32 for switching a start application program. The case that the check box 31 is in a checked state is setting of starting the OS even in a state in which a power source of the personal computer body has been turned off or suspended, and also the case of no check state is setting in which the OS is not started in a power-off or suspended state. Further, in order to change an application program allocated to the start button, when it becomes a state in which the button 32 is pushed in Fig. 3, an item for application program selection of Fig. 4 is added to the screen. In an example shown in Fig. 3, a check mark is made in the check box corresponding to the start button 15a and it is set to a setting state (here, called "button function on-state") in which an OS is booted up to start an application program by a user during no operation of the system. On the other hand, a check mark is not made in the check box corresponding to the start button 15b and it is set to a setting state (here, called "button function off-state") in which an application program is not started by a user during no operation of the system.

The setting screen shown in Fig. 4 shows an example of changing allocation of the start button 15b. An item of application programs allocated to the start button 15b is shown on the screen. In an example shown on the screen, a radio button for selecting an application program for Internet browser and a radio button for selecting an arbitrary program are shown. With regard to the button for selecting an arbitrary program, when a selection button is further operated, a program is allocated to the start button by selecting an arbitrary program from a list of various application programs stored in the HDD 28 (not shown). Setting information 27 set by the setting screen thus is stored inside the keyboard controller 26.

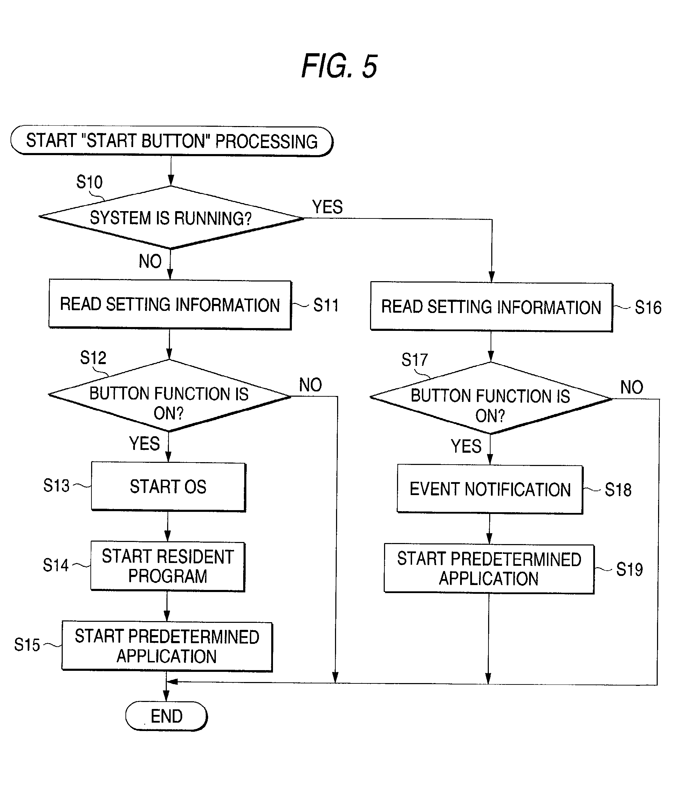

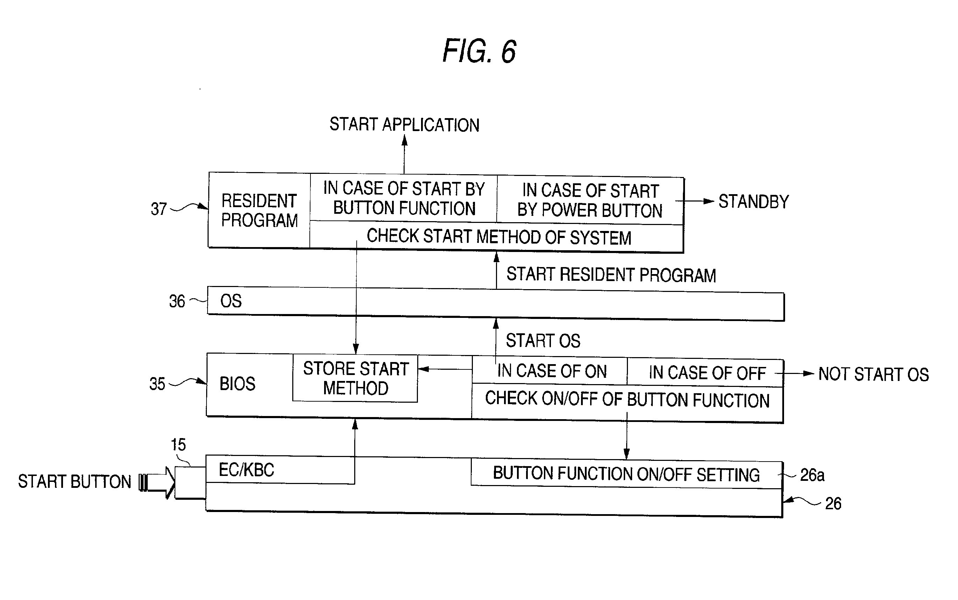

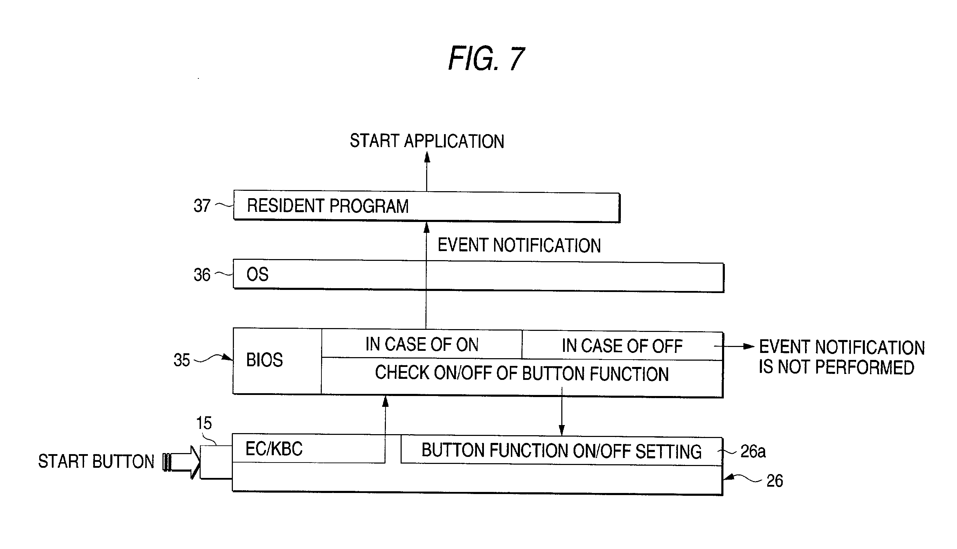

Subsequently, start processing control of an application program by the start button according to the invention will be described with reference to the drawings. Fig. 5 is a flowchart about start processing of an application program. Figs. 6 and 7 are software block diagrams showing a flow of control in the system at the time of operation of the start button. In the embodiment, the case of two start buttons is assumed, but since the respective start buttons become similar processing procedure with regard to processing control, only the processing about one start button is shown.

When it is detected that the start button is pushed down by the keyboard controller (EC/KBC) 26, an event is generated and start button processing shown in Fig. 5 begins. First, a decision whether or not the system is running by a BIOS 35 according to the event from the keyboard controller 26 is made (step S10). If the system of the personal computer is running, a flow proceeds to processing of step S16 and if the system is not running, the flow proceeds to processing of step S11.

First, processing of the case that the system is not running will be described. The description will be made with reference to steps S11 to S15 of Fig. 5 and the software block diagram of Fig. 6. When the BIOS decides that the system is not running in step S10, on-off setting information on a button function is then read as setting information on the start button stored in the keyboard controller 26 (step S11). Subsequently, the BIOS 35 decides whether this read setting information on the button function is set to any settings (step S12). Here, if it is decided that the button function is set to the OFF setting, event processing of the start button ends without starting an OS and an application program.

Also, if it is decided that the button function is set to the ON setting in step S12, an OS 36 is started (step S13). Subsequently, the OS 36 starts a resident program 37 (step S14). In the resident program 37, a start method of an application program allocated to the start button 15 is inquired of the BIOS 35 and a predetermined application program is started by a start method stored in the BIOS 35 (step S15). Also, when the power button 14 is pushed down, the resident program 37 becomes a standby state.

Next, processing of the case that the system is running will be described. The description will be made with reference to steps S16 to S19 of Fig. 5 and the software block diagram of Fig. 7. When the BIOS decides that the system is running in step S10, the on-off setting information on the button function is then read as the setting information on the start button stored in the keyboard controller 26 (step S16). Subsequently, the BIOS 35 decides whether this read setting information on the button function is set to any settings (step S17). Here, if it is decided that the button function is set to the OFF setting, event processing of the start button ends without starting an OS and an application program.

Also, if it is decided that the button function is set to the ON setting in step S17, the BIOS notifies the resident program 37 of an event to the effect that the start button is pushed through the OS 36 (step S18). The resident program 37 starts an application program allocated to the start button 15 (step S19).

According to the invention, for example, when a start button is set to ON setting, even in a state in which a computer system has not been started, an OS is started according to a button operation by the start button and then an application program is started, so that a start operation of the computer system and a start operation of the application program can be performed by one operation. When the start button is set to OFF setting, it is set by a user so that the computer system is not started previously by an operation of the start button, and even in case of operating the start button by mistake, the OS is not started and there is also an effect of suppressing battery consumption of the computer system even in case of a careless operation.

There can be provided a computer system with a high degree of flexibility capable of switching and setting processing at the time of operation of the start button according to a system state of the personal computer and freely making a change according to uses of a user in this manner.

Incidentally, in the embodiment, the case of allocating a start file of a predetermined application program to the start button has been assumed and described, but the contents allocated to the start button are not limited to the start file of the application program and may be, for example, a data file such as a bitmap image file or a HTML (Hypertext Markup Language) document. That is, in the invention, various functions of the start file or the data file, etc. may be allocated to the start button. Incidentally, in the case of allocating the data file, an application program for opening the data file is specified previously by a file system.

Subsequently, a second embodiment will be described. The basic hardware configuration and software configuration are approximately similar to those of the first embodiment, and detailed descriptions of the same configuration are omitted.

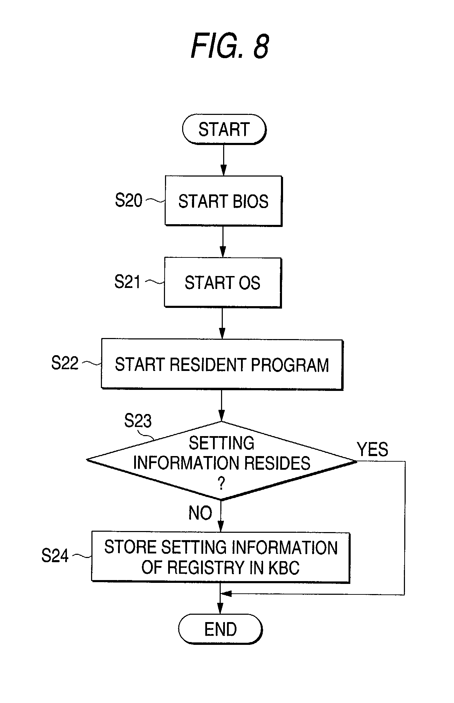

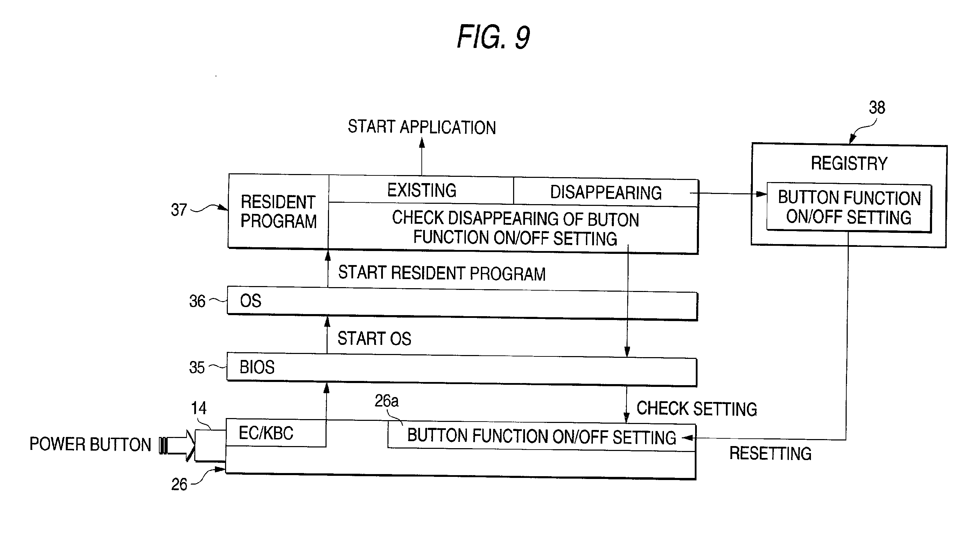

An operation description of the second embodiment will be made below with reference to Figs. 8 and 9. With regard to on-off setting of a button function, a user makes a setting and operation using the setting screen of Fig. 3. Here, setting information set is stored in a registry 38 and a keyboard controller 26 shown in Fig. 9. It is constructed so that the information stored inside the registry is stored in a nonvolatile storage device such as a HDD and does not disappear even when a power source of a personal computer body is turned off.

That is, a feature of the second embodiment is that the setting information stored inside the keyboard controller 26 may disappear due to removal of a battery (not shown) of a personal computer 10 or a break in an AC power source and is reset in the case of the disappearance.

When it is detected that a power button 14 is pushed by the keyboard controller 26, a BIOS 35 is started (step S20). Subsequently, an OS 36 is started by the BIOS 35 (step S21) and a resident program 37 is started by the OS 36 (step S22). In the resident program 37, it is checked whether or not on-off setting information on a button function is stored in the keyboard controller 26 (step S23). Here, if the setting information is not stored in the keyboard controller 26, a flow proceeds to step S24 and if the setting information is stored, resetting processing of the on-off information on the button function ends.

If the setting information is not stored in the keyboard controller 26 in step S23, the resident program 37 reads out the setting information stored in the registry 38 and stores the setting information in the keyboard controller 26 (step S24).

In this manner, even in case that the setting information stored in the keyboard controller 26 has disappeared due to removal of a battery or a break in an AC power source, switching of on-off setting of the button function can be performed surely by again storing the setting information of the registry 38 in the keyboard controller 26.

A start of an OS can be controlled according to an operating state of a computer, and operability of a user improves.

## Claims

1. A computer system comprising a button (15, 15a, 15b) which starts a predetermined function allocated thereto, **characterized by** comprising
first storage means (26a) which stores information on the predetermined function; and
control means (22, 23) which starts the computer system with the predetermined function based on the information when it is indicated that the computer system is started upon operation of the button (15, 15a, 15b).

2. The computer system as defined in claim 1, **characterized by** further comprising setting means (30) which sets the information,
wherein the first storage means (26a) stores the information set by the setting means (30).

3. The computer system as defined in claim 1, **characterized in that** the information includes first information regarding the predetermined function and second information regarding start of the computer system upon the operation of the button (15, 15a, 15b).

4. The computer system as defined in claim 2, **characterized by** further comprising detecting means (26) which detects operation of the button (15, 15a, 15b).

5. The computer system as defined in claim 4, **characterized in that** the first storage means (26a) is provided in the detecting means (26).

6. The computer system as defined in claim 2, **characterized by** further comprising a second storage means (28) which stores the information set by the setting means (30).

7. The computer system as defined in claim 6, **characterized in that** the first storage means (26a) is a volatile storage medium and the second storage means (28) is a nonvolatile storage medium.

8. The computer system as defined in claim 7, **characterized by** further comprising reading means (37) which reads the information from the second storage section (28), and stores the information into the first storage section (26a) when the information are deleted from the first storage section (26a) upon starting the computer system.

9. The computer system as defined in claim 1, **characterized in that** the predetermined function contains starting an OS of the computer system and an application operating on the OS.

10. Amethod of controlling start of a computer system, the method **characterized by** comprising:
detecting operation of a button (15, 15a, 15b) having a predetermined function allocated thereto;
reading information on the predetermined function; and
starting the computer system with the predetermined function based on the information when it is indicated that the computer system is started upon operation of the button (15, 15a, 15b).

11. The computer system as defined in claim 10, **characterized by** further comprising:
setting the information; and
storing the information in first storage means (26a).

12. The computer system as defined in claim 10, **characterized in that** the information includes first information regarding the predetermined function and second information regarding start of the computer system upon the operation of the button (15, 15a, 15b).

13. The computer system as defined in claim 11, **characterized by** further comprising storing the information in second storage means (28) different from the first storage means (26a).

14. The computer system as defined in claim 12, **characterized in that** the first storage means (26a) is a volatile storage medium and the second storage means (28) is a nonvolatile storage medium.

15. The computer system as defined in claim 14, **characterized by** further comprising:
reading the information from the second storage means (28) when the information are deleted from the first storage means (26a) upon starting the computer system; and
storing the information into the first storage means (26a).
